# EUROPÄISCHE PATENTSCHRIFT

(11) **EP 0 898 086 B1**
(45) Veröffentlichungstag und Bekanntmachung des Hinweises auf die Patenterteilung: **29.10.2003**
(21) Anmeldenummer: 98108988.1
(22) Anmeldetag: 18.05.1998
(51) Int. Cl.: F16B 5/00, A47B 96/06, F16B 12/12, A47B 96/02

(54) **Verbindungselement**
Fastening element
Elément de fixation

(30) Priorität: 21.08.1997 DE 19736299
(43) Veröffentlichungstag der Anmeldung: 24.02.1999
(73) Patentinhaber: Armbruster, Herbert, 73614 Schorndorf-Schlichten (DE)
(72) Erfinder: Armbruster, Herbert, 73614 Schorndorf-Schlichten (DE)
(74) Vertreter: Patentanwälte Rüger, Barthelt & Abel

(56) Entgegenhaltungen:
- EP-A- 0 206 960
- DE-A- 4 209 017
- FR-A- 2 574 876
- FR-A- 2 643 688
- FR-A- 2 663 404
- GB-A- 2 076 924
- US-A- 3 747 885
- US-A- 4 652 170
- US-A- 4 805 784

## Beschreibung

Aus dem Stand der Technik sind eine Vielzahl von Verbindungselementen bekannt, die dazu dienen, an einem rechtwinkligen Stoß zwei aus Holz oder Holzwerkstoff bestehende Teile, beispielsweise einen Fachboden und eine Stollenwand miteinander zu verbinden.

Hierzu können Runddübel verwendet werden, die aus einem entsprechend langen Stück eines Holzstabs gefertigt sind. Zur Verbindung mittels Runddübeln werden in die Flachseite des einen Bauteils sowie in die Stirnseite des damit zu verbindenden Bauteils entsprechende Löcher gebohrt, die die Runddübel aufnehmen. Bei dieser Art von Verbindungselement muss bei der Montage das Zusammenfügen in der Weise erfolgen, dass die Relativbewegung parallel zur Längsachse der Dübel erfolgt.

Wenn ein solches Verbindungselement verwendet wird, müssen sämtliche, mit einer Wand zu verbindenden Fachböden gleichzeitig montiert werden, ehe die nächste Wand angesetzt wird. Das bedeutet beispielsweise beim Regalbau, dass ein nachträglichges Einfügen von tragenden Fachböden nicht mehr möglich ist. Weitere Fachböden können nur lose auf Fachbodenträgern aufgelegt werden und bringen damit keinen Beitrag zur Stabilität des Regals.

Eine andere Art von Verbindungselementen sind sogenannte "Lamellendübel", die angenähert etwa die Form einer schlanken Ellipse haben. An die Stelle der Bohrungen in den Möbelteilen treten kurze kreissegmentförmige Nuten.

Von der Montage her verhalten sich die Lamellendübel letztlich wie Runddübel.

Damit solche Dübelverbindungen auch auf Zug senkrecht zur Wand fest sind, müssen sie obendrein eingeleimt werden.

Wenn Leim oder Klebstoff nicht verwendet werden soll, um an einem rechtwinkligen Stoß die beiden Teile in aufeinander senkrecht stehenden Richtungen zusammenzuhalten, können Gratverbindungen verwendet werden. Diese bestehen aus einer Nut in der Flachseite des einen Bauteils, z.B. in der Wand, und einer entsprechenden schwalbenschwanzförmigen Feder an der Stirnseite des anderen Bauteils. Zufolge des Schwalbenschwanzprofils verjüngt sich die Feder in Richtung auf die Mitte bzw. Stirnseite des betreffenden Bauteils.

Wenn mit Hilfe einer solchen Verbindung bei einem Regal der Fachboden mit der Stollenwand verbunden wird, stellt diese Verjüngung einen Schwachpunkt dar. Sobald der Fachboden belastet wird und sich aufgrund der Belastung beginnt durchzubiegen, entsteht an der Verjüngungsstelle ein nicht unerhebliches Biegemoment, das unter Umständen die schwalbenschwanzförmige Feder abbrechen lässt. Besonders ungünstig sind hierbei die Verhältnisse, wenn der Fachboden aus einem Holzwerkstoff, beispielsweise Spanplatten, besteht.

Darüber hinaus ist diese Art von Verbindung nicht einfach herzustellen. Zwar kann die schwalbenschwanzförmige Nut ohne weiteres mit einem entsprechenden kurzen profilierten Fräser eingefräst werden, doch die Herstellung der schwalbenschwanzförmigen Feder ist mit den meisten in einer Schreinerei verfügbaren Maschinen nicht zu erzeugen. Außerdem erfordert das Anfräsen der Feder in der Regel ein Umschlagen des Werkstücks, es sei denn, man verwendet eine Werkzeugmaschine mit zwei Arbeitsspindeln.

Eine Verbindung, die ebenfalls auf einer Schwalbenschwanzverbindung basiert, ist aus der DE-U-1 942 249 bekannt. Hierbei wird eine separate Leiste verwendet, die, auf ihre Länge gesehen, eine konstante Querschnittsgestalt hat. Diese Querschnittsgestalt setzt sich gedanklich aus einem Trapez und einer daran angeformten Tannenbaumgestalt zusammen.

Der Fachboden enthält eine über die Länge durchgehende Nut in der Seitenkante, in die die tannenbaumähnliche Struktur eingepresst wird so weit, bis der Leistenteil mit dem trapezförmigen Querschnitt an der betreffenden Stirnkante anliegt.

Die Durchbiegung des Fachbodens aufgrund einer Belastung führt im Bereich des tannenbaumförmigen Profils zu erheblichen Sprengkräften.

Aus der DE-A-37 29 664 ist eine Profilschiene zum Aufbauen eines Messestandes bekannt. Der Querschnitt dieser Profilschiene, die als Pfeiler dient, setzt sich aus einem zylindrischen Mittelteil und strahlenförmig daran angefügten seitlichen Leisten zusammen, die radial von dem zylindrischen Mittelteil wegstehen. Jede seitliche Leiste besteht aus einem geraden armförmigen Abschnitt, der am Ende in einen kreisförmigen Abschnitt übergeht.

Zur Verbindung eines Regalbodens mit einer Stollenwand ist diese bekannte Profilschiene weder geeignet noch vorgesehen.

Die DE-C-42 36 919 zeigt einen Verbindungsbeschlag zum Verbinden von Ecken an Rahmen u.dgl. Das Verbindungselement besteht aus zwei teilzylindrischen Abschnitten, die über einen Stiel miteinander verbunden sind. Zufolge der besonderen Gestalt des bekannten Verbindungselementes soll es möglich sein, die Rahmenteile im Bereich der Ecke geringfügig gegeneinander zu verschieben, um Toleranzen bei der Lage der Aufnahmebohrungen, in denen das Verbindungselement steckt, auszugleichen. Diese Fähigkeit der Relativbewegung der Teile im Bereich der Stoßfuge gegeneinander macht das Verbindungselement zur Anwendung bei Regalböden u.dgl. ungeeignet, weil die Höhenlage nicht exakt definiert wird. Sie hängt vom Abstand der Bohrungen voneinander ab.

Aus der DE 42 09 017 ist ferner ein Dübelelement bekannt, das dazu dient, zwei Holzplatten an einer Schmalseite Stoß auf Stoß zu verbinden. Das Dübelelement hat im Querschnitt etwa die Gestalt eines Knochens mit zwei kreisförmigen Abschnitten und einen dazwischen sich erstreckenden Halsteil. Dieses Dübelelement eignet sich nicht dazu einen Regalboden mit einer Stollenwand zu verbinden.

Ausgehend hiervon ist es Aufgabe der Erfindung, ein Verbindungselement zu schaffen, mit dem zwei Teile an einem rechtwinkligen Stoß miteinander verbunden werden können, wobei das Verbindungselement in der Lage ist, mit Hilfe von Formschluss Kräfte zu übertragen, die senkrecht zu der Stirnseite desjenigen Bauteils wirken, das mit dieser Stirnseite an der Flachseite eines anderen Bauteils anliegt und das eine größere Festigkeit aufweist.

Ferner ist es Aufgabe der Erfindung, ein Möbelstück zu schaffen, bei dem Wand und Fachboden durch Formschluss zusammengehalten und die Fachböden nachträglich einsetzbar sind.

Erfindungsgemäß wird diese Aufgabe durch das Verbindungselement mit den Merkmalen des Anspruchs 1 bzw. durch das Möbelstück mit den Merkmalen des Anspruchs 10 gelöst.

Bei dem neuen Verbindungselement, das eine Art loser Feder ist, setzt sich die Querschnittsgestalt gedanklich aus zwei Abschnitten zusammen. Der eine Abschnitt hat dabei eine etwa kreisförmige Gestalt. Wenn dieser Abschnitt in der Stirnseite jenes Bauteils untergebracht wird, das z.B. einen Fachboden bildet, können an dem Verbindungselement praktisch keine Biegemomente auftreten, weil der Fachboden, der mit einer entsprechend komplementären Nut versehen ist, sich beim Durchbiegen auf dem kreisförmigen Teil gelenkartig drehen kann. Somit werden an dem kreisförmigen Abschnitt der Querschnittsgestalt nur Querkräfte bzw. Zugspannungen eingeleitet. Beide Arten von Kräften können an der verjüngten Übergangsstelle von dem kreisförmigen Abschnitt in den anderen Abschnitt besser übertragen werden. Die Übergangsstelle wird praktisch biegemomentfrei gehalten.

Der in der Flachseite untergebrachte Abschnitt des Querschnittsprofils richtet sich danach, welche Art von Nut dort im einfachsten Falle unterzubringen ist. Es kann dies sowohl eine Schwalbenschwanz- als auch eine T-Nut sein. Dabei hat die Schwalbenschwanznut den wesentlichen Vorteil, dass der kreisförmige Abschnitt praktisch unmittelbar in den trapezförmigen Abschnitt übergehen kann und ein Halsteil entfällt, wie es beispielsweise bei einer T-Nut erforderlich wäre. Außerdem ist die Schwalbenschwanznut bei vergleichbarer Festigkeit platzsparender.

Mit dem erfindungsgemäßen Verbindungselement ist es möglich, zwischen zwei im richtigen Abstand fixierte Stollenwände einen Fachboden nachträglich einzusetzen, wobei die Verbindungsstelle in der Lage ist, sowohl die bei der Belastung des Fachbodens auftretenden Querkräfte aufzunehmen als auch Kräfte, die bestrebt wären, die beiden Wände voneinander zu entfernen. Die Festigkeit in der letztgenannten Richtung wird ausschließlich aufgrund des Formschlusses erreicht und es bedarf nicht der Verwendung von Leim oder Kleber zur Herstellung eines Stoffschlusses.

Herstellungsseitig ist diese Verbindung ebenfalls sehr günstig, weil in den schwer handhabbaren großen Teilen nur einfache, mit profilierten Fingerfräsern herstellbare Nuten enthalten sind. Das Verbindungselement dagegen lässt sich ohne weiteres mit der Umfangsseite eines Profilsfräsers herstellen.

In der Zeichnung ist ein Ausführungsbeispiel des Gegenstandes der Erfindung dargestellt. Es zeigen:

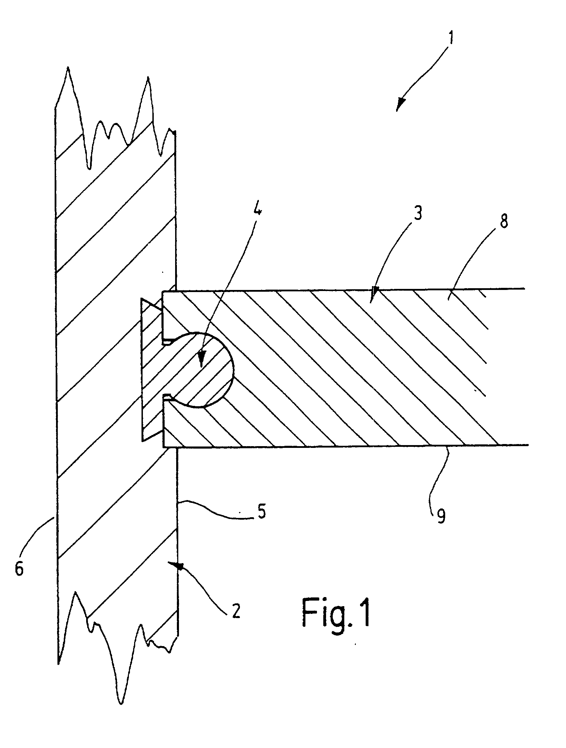

Fig. 1 den Stoß zwischen einer Wand und einem Fachboden, bei einem ausschnittsweise und geschnitten veranschaulichten Regal,
Fig. 2 das Verbindungselement für das Regal nach Fig. 1, in einer perspektivischen Darstellung, und
Fig. 3 das Verbindungselement in einer vergrößerten Draufsicht auf die Stirnseite.

In den Figuren ist ein Ausschnitt eines Möbelstücks 1, beispielsweise eines Regals, veranschaulicht. Zu dem Möbelstück 1 gehören wenigstens eine aus Holz oder Holzwerkstoff bestehende Seitenwand 2 und ein ebenfalls aus Holz oder Holzwerkstoff bestehender Fachboden 3, der mit der Seitenwand 2 über ein Verbindungselement 4 formschlüssig miteinander verbunden ist. Das Verbindungselement ist eine Art Feder.

Die Seitenwand 2 weist zwei zueinander parallele Flachseiten 5 und 6 auf. Die beiden Flachseiten 5 und 6 sind über Stirnflächen miteinander verbunden, die rechtwinklig zu den beiden Flachseiten 5 und 6 verlaufen. Von den Stirnflächen ist lediglich die vordere Stirnfläche 7 in den Figuren zu sehen.

Der Fachboden 3 ist ebenfalls eine Platte mit einer oberen und einer dazu parallelen unteren Flachseite 8 und 9. Die beiden Flachseiten 8 und 9 sind über insgesamt vier Stirnflächen miteinander verbunden, die zu den Flachseiten 8 und 9 rechtwinklig verlaufen. Von den insgesamt vier Stirnseiten sind in den Figuren lediglich die Stirnflächen 11 und 12 zu sehen, die an einer Ecke 13 rechtwinklig zusammenstoßen. Die Stirnfläche 11 ist eben.

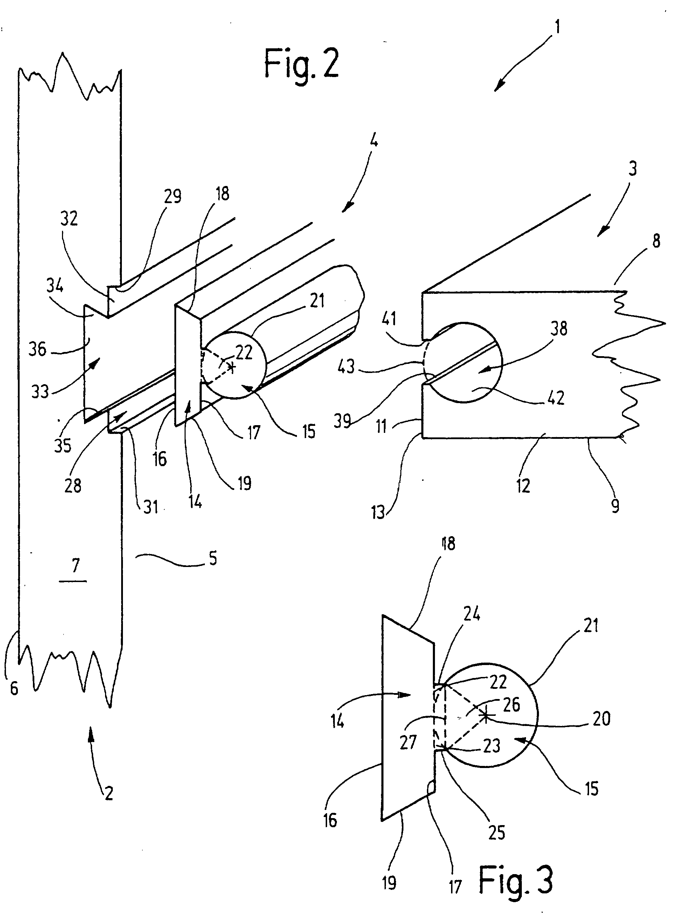

Das Verbindungselement 4, dessen Querschnittsgestalt in Fig. 3 veranschaulicht ist, besteht ebenfalls vorzugsweise aus Holz und ist, wie erwähnt, eine Art Feder. Die Querschnittsgestalt setzt sich gedanklich aus zwei Abschnitten 14 und 15 zusammen.

Der Abschnitt 14 der Querschnittsgestalt hat die Form eines regulären Trapezes, das von zwei zueinander parallelen geraden Seitenkanten (Grundlinien) 16 und 17 sowie zwei in Richtung auf die Seitenkante 17 konvergierenden kurzen ebenfalls geraden Seitenkanten 18 und 19 begrenzt ist. Der Abschnitt 14 ist schwalbenschwanzförmig.

Der Abschnitt 15 der Querschnittsgestalt des Verbindungselementes 4 hat dagegen die Gestalt eines Kreises mit einem Mittelpunkt 20 und wird von einer Kreislinie 21 begrenzt. Der Kreis hat einen Durchmesser von ca. 15 mm für einen Fachboden 3 von ca. 25 mm, dh. der Durchmesser beträgt ca. 60% der Dicke des Fachbodens 3.

Die beiden Abschnitte 14 und 15 sind so zueinander angeordnet, dass die Kante 17 von dem Mittelpunkt 20 einen Abstand aufweist, dessen Länge gleich dem Radius des Abschnitts 15 zuzüglich oder abzüglich höchstens 15% des Radius ist, vorzugsweise höchsten 10% des Radius. Wenn der Abstand gleich dem Radius ist, ist die Kante 17 eine Tangente zu der Kreislinie 21 bildet.

Um die Festigkeit an der Übergangsstelle zwischen dem Abschnitt 14 und dem Abschnitt 15 zu erhöhen, sind weitere angenähert dreieckförmige Profilabschnitte 22 und 23 vorhanden, die den Zwischenraum zwischen den beiden Abschnitten 14 und 15 ein Stück weit ausfüllen. Die dreieckförmigen Abschnitte 22 und 23 sind von zueinander parallelen Außenkanten 24 und 25 sowie der gedachten Verlängerung der Kreislinie 21 und der gedachten Fortsetzung der Seitenkante 17 begrenzt, wie dies die Fig. 3 erkennen lässt.

Die Außenkanten 24 und 25 stehen senkrecht auf der kürzeren der beiden langen Kanten 17 des Abschnittes 14. Voneinander haben sie einen Abstand entsprechend einem Zentriwinkel 26, bezogen auf den Abschnitt 15 von ca. 80°.

Die so beschriebene Querschnittsgestalt lässt sich auch verstehen als zusammengesetzt aus einem regulären Trapez, einem rechteckförmigen Halsteil und einem einseitig segmentförmig abgeflachten Kreis. Der Haltsteil wird definiert durch einen Abschnitt der Kante 17, den beiden Kanten 24 und 25 sowie einer geraden Linie 27, die parallel zu der Kante 17 verläuft und deren Endpunkte an den Schnittpunkten der Kanten 24 und 25 mit der Kreislinie 21 liegen.

Die Querschnittsgestalt ist spiegelsymmetrisch insofern, als der Mittelpunkt 20 auf der Spitze eines gedachten gleichschenkligen Dreiecks liegt, dessen andere Ecken am Schnittpunkt der Grundlinie 16 mit den Seiten 18 und 19 liegen.

Das Verbindungselement 4 hat über seine gesamte Länge, die vorzugsweise genauso groß ist wie die Länge der Stirnseite 11, eine konstante Querschnittsgestalt, wie sie soeben beschrieben ist.

Zur Verbindung der Wand 2 mit dem Fachboden 3 enthält die Wand 2 in ihrer Flachseite 5 eine rechteckige Nut 28, die von zwei zueinander parallelen Nutenwänden 29 und 31 sowie einem ebenen Nutenboden 32 begrenzt ist. Diese Nut 28 geht von der Stirnfläche 7 aus und führt über die gesamte Tiefe der Flachseite 5 bis zu der der Stirnfläche 7 gegenüberliegenden dazu parallelverlaufenden Stirnfläche.

Der Abstand der beiden zueinander parallelen Nutenwände 29 und 31 entspricht der Dicke des Fachbodens 3, d.h. dem Abstand der beiden Flachseiten 8 und 9 voneinander.

Ausgehend von dem Nutenboden 32 enthält die Seitenwand 2 eine weitere schwalbenschwanzförmige Nut 33, die von zwei in Richtung auf den Nutenboden 32 konvergierenden Nutenwänden 34 und 35 sowie einem ebenen Nutenboden 36 begrenzt ist. Die schwalbenschwanzförmige Nut 33 bildet zusammen mit dem trapzezförmigen Abschnitt 14 der Querschnittsgestalt des Verbindungselementes 4 eine Schwalbenschwanzverbindung. Dabei entspricht die Tiefe der schwalbenschwanzförmigen Nut 33 dem Abstand, den die beiden Seiten (Grundlinien) 16 und 17 des Abschnittes 14 voneinander haben.

Mit Hilfe der Schwalbenschwanznut 33 und des Abschnittes 14 ist das Verbindungselement 4 über eine Schwalbenschwanzverbindung mit der Wand 2 formschlüssig verbunden, und zwar sowohl bezüglich Kräften, die senkrecht zu der Flachseite 5 wirken als auch Kräften, die in der Ebene der Flachseite 5 wirksam sind und parallel zu der Stirnfläche 7 verlaufen. Eine Bewegbarkeit des Verbindungselementes 4 ist lediglich noch in Längsrichtung der Nuten 28 und 33 vorhanden.

Der Fachboden 3 enthält in seiner Stirnfläche 11 eine an den Abschnitt 15 angepasste Nut 38. Diese Nut 38 wird, ausgehend von der ebenen Stirnseite 11, von zwei zueinander parallelen ebenen und schmalen Nutenwänden 39 und 41 begrenzt, die an ihrer von der Stirnseite 11 abliegenden Kante in eine kreiszylindrische Fläche 42 übergehen. Der Durchmesser dieser kreiszylindrischen Fläche 42 entspricht dem Durchmesser der Kreislinie 21. Außerdem ist die kreiszylindrische Fläche 42 so gelegen, dass, wie eine gestrichelte Linie 43 veranschaulicht, die gedachte Fortsetzung der Zylinderfläche 42 im Bereich zwischen den beiden Nutenwänden 39 und 41 die gerade Stirnfläche 11 gerade tangiert.

Um Sprengkräfte zu vermeiden, ist der Abstand der Nutenwände 39 und 41 voneinander etwas größer gewählt, als es dem Abstand der beiden Kanten 24 und 25 entspricht.

Mit Hilfe der kreiszylindrischen Nut 38 kann ebenfalls eine formschlüssige Verbindung zwischen dem Fachboden 3 und dem Verbindungselement 4 erzeugt werden. Der Formschluss zwischen diesen beiden Strukturelementen kann Kräfte in derselben Richtung übertragen, wie der Formschluss zwischen dem Verbindungselement 4 und der Seitenwand 2.

Es leuchtet ohne weiteres ein, dass bei dem Möbelstück 1 auf der anderen Seite des Fachbodens 3 in entsprechender Weise eine Seitenwand 2 vorhanden ist und der Stoß zwischen dem Fachboden 3 und der Seitenwand 2 in derselben Weise ausgebildet ist wie dies in den Figuren für die linke Seite gezeigt ist.

Die Montage des schematisch beispielhaft gezeigten Möbelstücks geschieht wie folgt:

Zwei Seitenwände 2 werden in einem Abstand entsprechend der Breite des Fachbodens 3 aufgestellt und gehalten. Sodann wird der Fachboden 3 zwischen die beiden Seitenwände 2 eingeschoben, wobei er mit seiner Stirnfläche 11 in der rechteckigen Nut 28 zu liegen kommt, und zwar an seinen beiden Enden. Sodann wird das Verbindungselement 4 von der Stirnfläche 7 her eingeschoben, wodurch der Fachboden 3 in der Seitenwand 2 gesichert wird. Die gleiche Maßnahme wird auch an dem anderen, nicht dargestellten Ende des Fachbodens 3 durchgeführt. Sobald das Verbindungselement 4 eingeschoben ist, kann der Fachboden 3 nicht mehr in Richtung senkrecht zu der Flachseite 5 der Seitenwand 2 bewegt werden. Die formschlüssige Verbindung des Verbindungselementes 4 mit dem Fachboden 3 und die gleichzeitige formschlüssige Verbindung des Verbindungselementes 4 mit der Seitenwand 2 verhindern dies.

Mit Hilfe des neuen Verbindungselementes 4 ist es möglich, nachträglich weitere Fachböden 3 in der gleichen Weise wie oben beschrieben zu montieren. Selbst wenn zwei Seitenwände 2 bereits durch zwei Fachböden 3 in einem exakten Abstand zueinander gehalten sind und mit diesen zusammen eine Art Korpus bilden, kann jederzeit ein weiterer Fachboden 3 in die entsprechend vorbereiteten Nuten 28 eingeschoben werden und dort durch Einfügen der Verbindungselemente 4 gesichert werden.

Wenn nach der Montage der Fachboden 3 belastet wird und infolge der Belastung beginnt sich durchzubiegen, entstehen an der Verbindungsstelle zwischen dem Abschnitt 14 und dem Abschnitt 15 des Verbindungselementes 4 im Wesentlichen nur Zugkräfte. Es werden praktisch keine Biegemomente hervorgerufen. Um dies zu erläutern, sei angenommen, dass die Zylinderfläche 42 in Richtung auf die Stirnfläche 11 vorgeschoben ist, soweit, bis die gedachte Fortsetzung 43 über die Stirnfläche 11 übersteht. Nach dem Zusammenstecken mit dem Verbindungselement 4 würde dann die der Kante 17 entsprechende Fläche des Verbindungselementes 4 im Abstand zu der Stirnseite 11 stehen. Die Folge hiervon wäre, dass sich der Fachboden 3 begrenzt um den Abschnitt 15 drehen könnte, ohne den Abschnitt 15 auf Biegung zu beanspruchen.

Obwohl bei der praktischen Ausführung aus optischen Gründen möglichst kein Spalt zwischen der Stirnfläche 11 und der der Kante 17 entsprechenden Fläche des Verbindungselementes 4 entstehen sollte, ergeben sich dennoch die oben geschilderten Verhältnisse, einfach deswegen, weil eine gewisse elastische Nachgiebigkeit des Fachbodens 3 im Bereich der Stirnfläche 11 vorhanden ist. Das Verbindungselement 4 wird zwischen den Abschnitten 14 und 15 auf diese Weise im Wesentlichen nur auf Zug belastet.

Die rechteckige Nut 28 hat den Vorteil, Kräfte, die senkrecht zu der Flachseite 5 wirksam sind und bestrebt wären, den Fachboden 3 aus der Nut 28 herauszuziehen, daran zu hindern, die Nut 38 zu sprengen. Der Fachboden 3 wird mit Hilfe der Nutenwände 29 und 21 von außen her in seiner Dicke fixiert, so dass im Bereich der Nutenwände 41 und 39 wirkende Sprengkräfte den Fachboden 3 nicht spalten können.

Schließlich ist die rechteckige Nut 28 in der Lage, den Fachboden 3 an seiner unteren Flachseite 9 zu unterstützen, wodurch ein Teil der Querkräfte, hervorgerufen durch die Belastung des Fachbodens 3, in die Nutenwand 31 eingeleitet werden. Das beschriebene System ist insoweit statisch mehrfach überbestimmt und die Materialelastizitäten sorgen selbsttätig für einen gewissen Kräfteausgleich an dem Stoß und den Fügeflächen zwischen der Wand 2, dem Verbindungselement 4 und dem Fachboden 3.

Wenn das Verbindungselement 4 aus Holz besteht, werden die Jahresringe zweckmäßigerweise so ausgerichtet, dass sie etwa rechtwinklig zu den Kanten 16 und 17 verlaufen.

Wie die Figuren ferner erkennen lassen, ist das Herstellen der Nuten 28, 33 und 38 verhältnismäßig einfach. Sie können mit geeigneten profilierten fingerförmigen Fräsern leicht mit sehr engen Toleranzen hergestellt werden. Die Toleranzen sind lediglich von den Toleranzen des Werkzeugs abhängig. Eine doppelte Bearbeitung von zwei Seiten her ist an den das Möbelstück bildenden Möbelteilen nicht erforderlich. Dies erhöht wesentlich die Präzision an der Stoßstelle. Lediglich das Verbindungselement 4 braucht auf einer Spezialmaschine hergestellt zu werden. Da es sich hierbei aber um ein Teil mit kleinen Querschnittsabmessungen handelt, ist die Herstellung wiederum sehr einfach.

Anstelle der Schwalbenschwanznut 33 kann auch eine T-Nut verwendet werden. Der Abschnitt 14 ist dann enstsprechend anzupassen ebenso wie die Länge des Halsabschnitts.

Bei einem Möbelstück mit einem rechtwinkligen Stoß wird zur Sicherung des Stoßes eine Feder verwendet, die sowohl formschlüssig in der Seitenwand als auch formschlüssig in dem Fachboden verankert ist. Die Feder erstreckt sich in Längsrichtung derjenigen Stirnfläche, die mit der Seitenwand in Verbindung steht und ist sowohl formschlüssig mit der Seitenwand als auch formschlüssig mit dem Fachboden verbunden. Um Biegemomente innerhalb der Feder zu verhindern, die entstehen, wenn sich der Fachboden durchbiegt, hat die Feder auf der Seite des Fachbodens einen Kreisquerschnitt.

## Patentansprüche

1. Längliches Verbindungselement (4), um ein erstes Bauteil (3) mit einem zweiten Bauteil (2) an einer Fügestelle formschlüssig zu verbinden,
mit einer Querschnittsgestalt, die sich aus einem ersten (15) und einem zweiten (14) Abschnitt zusammensetzt, von denen der erste (15) zur Verbindung mit dem ersten Bauteil (3) und der zweite (14) zur Verbindung mit dem zweiten Bauteil (2) vorgesehen ist, wobei
der erste Abschnitt (15) zumindest in einem Bereich bezogen auf die Längserstreckung des Verbindungselements (4) zumindest angenähert kreisförmig ist sowie einen Mittelpunkt (20) aufweist,
der zweite Abschnitt (14) einen Querschnitt aufweist, der an den Querschnitt einer Schwalbenschwanz- oder einer T-Nut angepasst ist sowie eine dem ersten Abschnitt (15) zugekehrten Seite (17) aufweist, und
der Abstand zwischen der zugekehrten Seite (17) des zweiten Abschnitts (14) und dem Mittelpunkt (20) des ersten Abschnitts (15) gleich dem Radius des ersten Abschnitts (15) plus/minus höchstens 15% des Radius des ersten Abschnitts (15) beträgt.

2. Verbindungselement nach Anspruch 1, **dadurch gekennzeichnet, dass** Abstand zwischen der zugekehrten Seite (17) des zweiten Abschnitts (14) und dem Mittelpunkt (20) des ersten Abschnitts (15) gleich dem Radius des ersten Abschnitts (15) plus/minus höchstens 10% des Radius des ersten Abschnitts (15) beträgt.

3. Verbindungselement nach Anspruch 1, **dadurch gekennzeichnet, dass** die Form des ersten Abschnitts (15) der Querschnittsgestalt über die gesamte Länge des Verbindungselements (4) im Wesentlichen konstant ist.

4. Verbindungselement nach Anspruch 1, **dadurch gekennzeichnet, dass** der erste Abschnitt (15) der Querschnittsgestalt unmittelbar in den zweiten Abschnitt (14) übergeht, derart, dass der erste Abschnitt (15) die Form eines an der Seite des zweiten Abschnitts (14) abgeflachten Kreises (21) hat.

5. Verbindungselement nach Anspruch 1, **dadurch gekennzeichnet, dass** die Form des zweiten Abschnitts (14) der Querschnittsgestalt über die gesamte Länge des Verbindungselements im Wesentlichen konstant ist.

6. Verbindungselement nach Anspruch 1, **dadurch gekennzeichnet, dass** der zweite Abschnitt (14) eine Form hat, die in formschlüssiger Weise mit einer hintergriffigen Nut (33) in dem zweiten Bauteil (2) zusammenwirkt.

7. Verbindungselement nach Anspruch 1, **dadurch gekennzeichnet, dass** der zweite Abschnitt (14) der Querschnittsgestalt zum Einstecken in eine T-Nut eingerichtet ist.

8. Verbindungselement nach Anspruch 1, **dadurch gekennzeichnet, dass** der zweite Abschnitt (14) der Querschnittsgestalt zum Einstecken in eine Schwalbenschwanznut (33) eingerichtet ist.

9. Verbindungselement nach Anspruch 1, **dadurch gekennzeichnet, dass** es aus Holz oder Holzwerkstoff oder Metall insbesondere Leichtmetall besteht.

10. Verbindungselement nach Anspruch 1, **dadurch gekennzeichnet, dass** es aus Holz besteht und die Jahresringe etwa rechwinkelig zu der Übergangsstelle zwischen den beiden Abschnitten verlaufen.

11. Verbindungselement nach Anspruch 1, **dadurch gekennzeichnet, dass** es aus Holz besteht und die Jahresringe etwa rechwinklig zu der Übergangsstelle zwischen den beiden Abschnitten des Verbindungselements verlaufen.

12. Möbelstück (1)
mit einem ersten plattenförmigen Bauteil (3), das in einer geraden Stirnfläche (11) eine zumindest an einem Ende offene Nut (38) enthält, deren Querschnittsgestalt zumindest angenähert die Form eines Kreises aufweist,
mit einem zweiten plattenförmigen Bauteil (2), das auf einer geraden Flachseiten (5) eine zumindest an einem Ende offene hintergriffige Nut (33) enthält,
wobei die beiden plattenförmigen Bauteile mittels wenigstens eines Verbindungselements nach einem oder mehreren der Ansprüche 1 bis 11 verbunden sind

13. Möbelstück nach Anspruch 12, **dadurch gekennzeichnet, dass** die Flachseite (5) des zweiten Bauteils (2) eine rechteckige Nut (28) mit einem Boden (32) aufweist, deren Weite der Stärke der Dicke des ersten Bauteils (3) im Bereich der Stirnfläche (11) entspricht, und dass die Nut (28) für das Verbindungselement (4) in dem Boden (32) der rechteckigen Nut (28) ausgebildet ist.

14. Möbelstück nach Anspruch 12, **dadurch gekennzeichnet, dass** der zweite Abschnitt (14) der Querschnittsgestalt des Verbindungselements (4) eine Form hat, die in formschlüssiger Weise mit einer hintergriffigen Nut (33) in dem zweiten Bauteil (2) zusammenwirkt.

15. Möbelstück nach Anspruch 12, **dadurch gekennzeichnet, dass** es aus Holz oder Holzwerkstoff besteht.

## Claims

1. Elongated connecting element (4) to positively connect a first structural part (3) to a second structural part (2) at a join,
with a cross-sectional form consisting of a first (15) and a second (14) section, of which the first (15) is provided for connection to the first structural part (3) and the second (14) is provided for connection to the second structural part (2), wherein
the first section (15) is at least approximately circular at least in one region in relation to the longitudinal extension of the connecting element (4), and also has a centre point (20),
the second section (14) has a cross-section, which is adapted to the cross-section of a dovetail groove or a T-groove, and also has a side (17) facing the first section (15), and
the distance between the facing side (17) of the second section (14) and the centre point (20) of the first section (15) is equal to the radius of the first section (15) plus/minus 15% at maximum of the radius of the first section (15).

2. Connecting element according to Claim 1, **characterised in that** the distance between the facing side (17) of the second section (14) and the centre point (20) of the first section (15) is equal to the radius of the first section (15) plus/minus 10% at maximum of the radius of the first section (15).

3. Connecting element according to Claim 1, **characterised in that** the shape of the first section (15) of the cross-sectional form is essentially constant over the entire length of the connecting element (4).

4. Connecting element according to Claim 1, **characterised in that** the first section (15) of the cross-sectional form merges directly into the second section (14) in such a manner that the first section (15) has the shape of a circle (21) flattened on the side of the second section (14).

5. Connecting element according to Claim 1, **characterised in that** the shape of the second section (14) of the cross-sectional form is essentially constant over the entire length of the connecting element.

6. Connecting element according to Claim 1, **characterised in that** the second section (14) has a shape which cooperates in a positive-locking manner with a rearward groove (33) in the second structural part (2).

7. Connecting element according to Claim 1, **characterised in that** the second section (14) of the cross-sectional form is fitted for plugging into a T-groove.

8. Connecting element according to Claim 1, **characterised in that** the second section (14) of the cross-sectional form is fitted for plugging into a dovetail groove (33).

9. Connecting element according to Claim 1, **characterised in that** it is made of wood or wood material or metal, in particular light metal.

10. Connecting element according to Claim 1, **characterised in that** it is made of wood and the growth rings run approximately at right angles to the transition point between the two sections.

11. Connecting element according to Claim 1, **characterised in that** it is made of wood and the growth rings run approximately at right angles to the transition point between the two sections of the connecting element.

12. Piece of furniture (1)
with a first board-type structural part (3), which in a straight face (11) contains a groove (38) open at least at one end, the cross-sectional form of said groove having at least approximately the shape of a circle,
with a second board-type structural part (2), which on a straight flat side (5) contains a rearward groove (33) open at least at one end,
wherein the two board-type structural parts are connected by means of at least one connecting element according to one or more of Claims 1 to 11.

13. Piece of furniture according to Claim 12, **characterised in that** the flat side (5) of the second structural part (2) has a rectangular groove (28) with a base (32), the width of which corresponds to the magnitude of thickness of the first structural part (3) in the region of the face (11), and that the groove (28) for the connecting element (4) is configured in the base (32) of the rectangular groove (28).

14. Piece of furniture according to Claim 12, **characterised in that** the second section (14) of the cross-sectional form of the connecting element (4) has a shape, which cooperates in a positive-locking manner with a rearward groove (33) in the second structural part (2).

15. Piece of furniture according to Claim 12, **characterised in that** it is made of wood or wood material.

## Revendications

1. Elément d'assemblage (4) allongé pour relier par complémentarité de formes, au niveau d'un point d'assemblage, un premier élément de construction (3) à un second élément de construction (2),
avec un profil transversal qui se compose d'une première portion (15) et d'une seconde (14) portion, parmi lesquelles la première portion (15) est prévue pour être fixée au premier élément de construction (3) et la seconde portion (14) est prévue pour être fixée au second élément de construction (2),
la première portion (15), au moins dans une partie par rapport à l'étendue de l'élément d'assemblage (4) dans la direction longitudinale, étant au moins sensiblement circulaire et présentant un centre (20),
la seconde portion (14) présentant une section transversale qui est adaptée à la section transversale d'une rainure en queue d'aronde ou d'une rainure en T et présente une face (17) tournée vers la première portion (15) et
la distance entre la face (17) de la seconde portion (14) tournée vers la première portion et le centre (20) de la première portion (15) étant égale au rayon de la première portion (15) plus/moins 15% maximum du rayon de la première portion (15).

2. Elément d'assemblage selon la revendication 1, **caractérisé en ce que** la distance entre la face (17) de la seconde portion (14) tournée vers la première portion et le centre (20) de la première portion (15) est égale au rayon de la première portion (15) plus/moins 10% maximum du rayon de la première portion (15).

3. Elément d'assemblage selon la revendication 1, **caractérisé en ce que** la forme de la première portion (15) du profil transversal est essentiellement constante sur toute la longueur de l'élément d'assemblage (4).

4. Elément d'assemblage selon la revendication 1, **caractérisé en ce que** la forme de la première portion (15) du profil transversal se raccorde directement à la seconde portion (14), de telle sorte que la première portion (15) a la forme d'un cerclé (21) aplati du côté de la seconde portion (14).

5. Elément d'assemblage selon la revendication 1, **caractérisé en ce que** la forme de la seconde portion (14) du profil transversal est essentiellement constante sur toute la longueur de l'élément d'assemblage (4).

6. Elément d'assemblage selon la revendication 1, **caractérisé en ce que** la seconde portion (14) a une forme qui coopère par complémentarité de formes avec une rainure (33) en contre-dépouille dans le second élément de construction (2).

7. Elément d'assemblage selon la revendication 1, **caractérisé en ce que** la seconde portion (14) du profil transversal est conformée à des fins de montage dans une rainure en T.

8. Elément d'assemblage selon la revendication 1, **caractérisé en ce que** la seconde portion (14) du profil transversal est conformée à des fins de montage dans une rainure en queue d'aronde (33).

9. Elément d'assemblage selon la revendication 1, **caractérisé en ce qu'**il est bois ou en un matériau à base de bois ou en métal, en particulier en alliage léger.

10. Elément d'assemblage selon la revendication 1, **caractérisé en ce qu'**il est en bois et que les cernes du bois s'étendent sensiblement perpendiculairement à la zone de raccordement entre les deux portions.

11. Elément d'assemblage selon la revendication 1, **caractérisé en ce qu'**il est en bois et que les cernes du bois s'étendent sensiblement. perpendiculairement à la zone de raccordement entre les deux portions de l'élément d'assemblage.

12. Meuble (1)
avec un premier élément de construction (3) en forme de plaque qui, dans une surface frontale (11) rectiligne, comporte une rainure (38) ouverte à au moins une extrémité, dont le profil transversal correspond au moins sensiblement à la forme d'un cercle,
avec un second élément de construction (4) en forme de plaque qui, dans une surface plane (5) rectiligne, comporte une rainure (33) en contre-dépouille, ouverte à au moins une extrémité,
les deux éléments de construction en forme de plaque étant assemblés à l'aide d'au moins un élément d'assemblage selon une ou plusieurs des revendications 1 à 11.

13. Meuble selon la revendication 12, **caractérisé en ce que** la surface plane (5) du second élément de construction (2) présente une rainure (28) à section rectangulaire avec un fond (32), dont la largeur correspond à l'épaisseur du premier élément de construction (3) dans la région de la surface frontale (11) et **en ce que** la rainure (28) pour l'élément d'assemblage (4) est aménagée dans le fond (32) de la rainure (28) à section rectangulaire.

14. Meuble selon la revendication 12, **caractérisé en ce que** la seconde portion (14) du profil transversal de l'élément d'assemblage (4) a une forme qui coopère par complémentarité de formes avec une rainure en contre-dépouille (33) dans le second élément de construction (2).

15. Meuble selon la revendication 12, **caractérisé en ce qu'**il est en bois ou en un matériau à base de bois.
